# EUROPÄISCHE PATENTSCHRIFT

(11) **EP 3 178 591 B1**
(45) Veröffentlichungstag und Bekanntmachung des Hinweises auf die Patenterteilung: **09.10.2019**
(21) Anmeldenummer: 16195748.5
(22) Anmeldetag: 26.10.2016
(51) Int. Cl.: B23B 31/26, B23B 31/30

(54) **SPANNSATZ UND SPANNVORRICHTUNG MIT EINEM DERARTIGEN SPANNSATZ**
CLAMPING SET AND TENSIONING DEVICE WITH SUCH A CLAMPING SET
KIT DE SERRAGE ET DISPOSITIF DE SERRAGE COMPRENANT UN TEL KIT DE SERRAGE

(30) Priorität: 07.12.2015 DE 102015121236
(43) Veröffentlichungstag der Anmeldung: 14.06.2017
(73) Patentinhaber: Ott-Jakob Spanntechnik GmbH, 87663 Lengenwang (DE)
(72) Erfinder: Greif, Josef, 87496 Friesenried (DE); Rösch, Conrad, 87459 Pfronten (DE); Reisacher, Bartholomäus, 86807 Buchloe (DE)
(74) Vertreter: Charrier Rapp & Liebau

(56) Entgegenhaltungen:
- DE-A1-102004 035 993
- US-A- 4 997 325
- US-A1- 2005 025 600
- US-A1- 2006 251 487
- US-A1- 2007 001 407

## Beschreibung

Die Erfindung betrifft einen Spannsatz zum Spannen eines Werkstücks oder eines Werkzeugs bzw. einer Werkzeugaufnahme an einem Maschinenteil einer Werkzeugmaschine nach dem Oberbegriff des Anspruchs 1. Die Erfindung betrifft außerdem eine Spannvorrichtung mit einem derartigen Spannsatz.

Aus der DE 101 59 611 C1 ist ein Spannsatz gemäß dem Oberbegriff des Anspruchs 1 mit einem über eine Spannstange axial verschiebbaren Spannkonus und mehreren an dessen Außenseite in Umfangsrichtung voneinander beabstandet anliegenden, klauenförmigen Spannelementen bekannt. Die klauenförmigen Spannelemente haben an ihrem vorderen Ende schräge erste Spannflächen zur Anlage an korrespondierenden Spannschrägen des Hohlschaftwerkzeugs und an ihrem hinteren Ende schräge zweite Spannflächen zur Anlage an einer entsprechenden Gegenfläche der Maschinenspindel. Der einteilig ausgebildete Spannkonus weist an seinem vorderen Ende erste konische Spannflächenbereiche und an seinem hinteren Ende zweite konische Spannflächenbereiche zur Anlage an entsprechenden Innenflächen am vorderen und hinteren Ende der klauenförmigen Spannelemente auf. Durch Axialverschiebung des am Ende eines Spannstange angeordneten Spannkonus werden die klauenförmigen Spannelemente in einer zur Mittelachse der Maschinenspindel parallelen Lage radial nach außen oder innen verschoben, wodurch das Hohlschaftwerkzeug gespannt bzw. freigegeben werden kann. Aufgabe der Erfindung ist, einen Spannsatz und eine Spannvorrichtung mit einem derartigen Spannsatz zu schaffen, die einen effektiveren Spannvorgang ermöglichen.

Diese Aufgabe wird durch einen Spannsatz mit den Merkmalen des Anspruchs 1 und durch eine Spannvorrichtung mit den Merkmalen des Anspruchs 6 gelöst. Zweckmäßige Weiterbildungen und vorteilhafte Ausgestaltungen der Erfindung sind in den Unteransprüchen angegeben.

Bei dem erfindungsgemäßen Spannsatz weist der Spannkonus zwei in Axialrichtung entgegengesetzt zueinander verschiebbare Teile auf. Im Vergleich zu einem einteiligen Spannkonus wird die Betätigungskraft nicht am Gehäuse abgestützt, sondern auf das andere Teil des Spannkonus geleitet. Dadurch ergibt sich ein verbesserter Wirkungsgrad und der Spannvorgang kann effektiver gestaltet werden.

Erfindungsgemäß sind die Spannelemente durch Zusammenbewegen der beiden Teile des Spannkonus in die radial äußere Spannstellung und durch Auseinanderbewegen der beiden Teile des Spannkegels in die radial innere Lösestellung bewegbar. Mit entgegengesetzt geneigten Spannschrägen können die Spannelemente in einer alternativen Ausführung aber auch durch Auseinanderbewegen der beiden Teile des Spannkonus in die Spannstellung und durch Zusammenbewegen der beiden Teile des Spannkonus in die Lösestellung bewegt werden.

Eine gegensinnige Verschiebung der beiden separaten Teile des Spannkonus wird in zweckmäßiger Weise durch eine Spannstange erreicht, die ein mit dem ersten Teil des Spannkonus verbundenes erstes Stangenteil und ein mit dem zweiten Teil des Spannkonus verbundenes zweites Stangenteil aufweist. Vorzugsweise kann das erste Stangenteil axial verschiebbar innerhalb des rohrförmigen zweiten Stangenteils angeordnet sein.

In einer weiteren vorteilhaften Ausgestaltung weisen die Spannelemente eine erste innere Spannfläche zur Anlage an einer konischen Außenfläche des ersten Teils des Spannkonus und eine zweite innere Spannfläche zur Anlage an einer konischen Außenfläche des zweiten Teils des Spannkonus auf.

Eine gute und genaue Führung der beiden gegeneinander verschiebbaren Teile des Spannkonus kann dadurch erreicht werden, dass das erste Teil des Spannkonus einen zylindrischen Führungsbereich enthält, auf dem ein hohlzylindrischer Führungsabschnitt des zweiten Teils des Spannkonus verschiebbar geführt ist.

Die Spannelemente können z.B. in Form von Spannklauen mit einer durch einen konischen Flächenabschnitt gebildeten ersten äußeren Spannfläche und einer zur ersten Spannfläche entgegengesetzt geneigten und ebenfalls durch einen konischen Flächenabschnitt gebildeten zweiten äußeren Spannfläche ausgebildet sein. Die Spannelemente können aber auch eine andere Form aufweisen.

Die Erfindung betrifft außerdem eine Spannvorrichtung mit einem innerhalb eines Maschinenteils angeordneten, vorstehend beschriebenen Spannsatz und einer dem Spannsatz zugeordneten Betätigungseinrichtung.

Die Betätigungseinrichtung kann einen innerhalb eines Gehäuses angeordneten Zylinder enthalten, in dem ein über eine erste Kolbenstange mit dem ersten Teil des Spannkonus verbundener erster Kolben und ein über eine zweite Kolbenstange mit dem zweiten Teil des Spannkonus verbundener zweiter Kolben axial verschiebbar angeordnet sind. Zwischen den beiden Kolben kann sich eine erste Druckkammer befinden, die über einen ersten Kanal in einer den Zylinder umgebenden Hülse mit einem ersten Anschluss verbunden ist. Zwischen dem ersten Kolben und einer Stirnfläche eines in das Gehäuse eingeschraubten hinteren Endteils am hinteren Ende des Zylinders kann eine zweite Druckkammer und zwischen dem zweiten Kolben und einem Abschlussring am vorderen Ende des Zylinders eine dritte Druckkammer begrenzt werden, wobei die zweite Druckkammer und die dritte Druckkammer mit einem zweiten Anschluss verbunden sind.

Die Betätigung des Spannsatzes kann auch auf andere Weise erfolgen. So können z.B. die beiden Teile des Spannkonus über eine zwischen den beiden Stangenteilen der Spannstange eingespannte Federanordnung auseinandergedrückt und somit die Spannelemente in einer Spannstellung gehalten werden. Um die Spanneelemente in die Lösestellung zu verschieben, können beiden Teile des Spannkonus über eine elektrisch, pneumatisch oder hydraulisch betätigte Löseeinrichtung entgegen der Kraft der Federanordnung zusammenbewegt werden.

Bei dem Maschinenteil kann es sich um eine drehbar gelagerte und durch einen Antrieb drehbare Arbeitsspindel einer Werkzeugmaschine handeln.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Spannvorrichtung mit einer Spannstange und einem Spannsatz in einem Längsschnitt;
- **Figur 2**: eine Detailansicht des in Figur 1 gezeigten Spannsatzes in einem Längsschnitt;
- **Figur 3**: den Spannsatz in einer Spannstellung;
- **Figur 4**: den Spannsatz in einer Lösestellung und
- **Figur 5**: eine Betätigungseinrichtung zur Bewegung des Spannsatzes zwischen der Spannstellung und der Lösestellung.

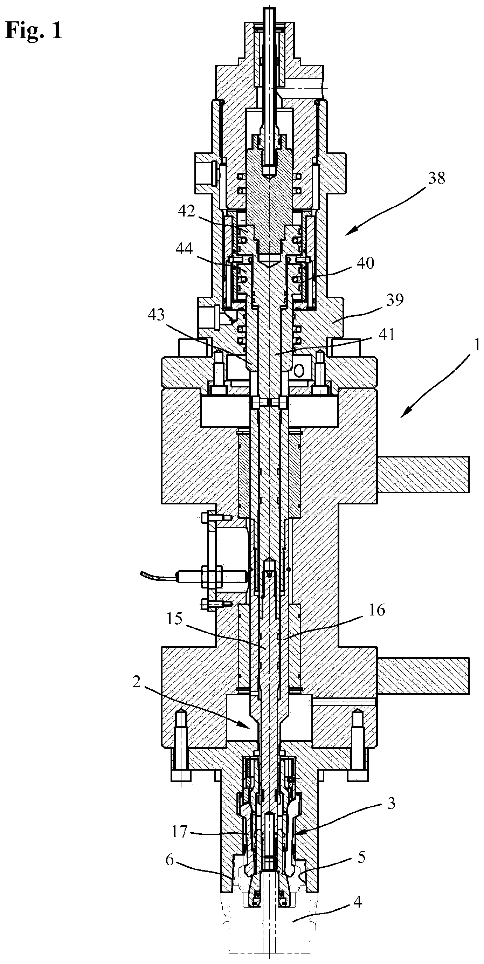

In Figur 1 ist eine in einem Maschinenteil 1 integrierte Spannvorrichtung mit einer innerhalb des Maschinenteils 1 axial verschiebbaren Spannstange 2 und einem mittels der Spannstange 2 zwischen einer Spannstellung und Lösestellung beweglichen Spannsatz 3 zum Spannen oder Freigeben einer gestrichelt dargestellten Werkzeugaufhahme 4 bzw. eines Werkzeugs oder Werkstücks in einem Längsschnitt gezeigt. Bei der gezeigten Ausführung ist das Maschinenteil 1 ein aus mehreren Teilen zusammengesetztes, stationäres Maschinenelement, das eine konische Aufiiahmeöffnung 5 zur Aufnahme eines Hohlkegel-Schafts 6 der Werkzeugaufhahme 4 enthält. Das Maschinenteil 1 kann aber auch eine innerhalb eines Spindelgehäuses drehbar gelagerte und durch einen Antrieb rotatorisch angetriebene Arbeitsspindel einer Werkzeugmaschine oder dgl. sein.

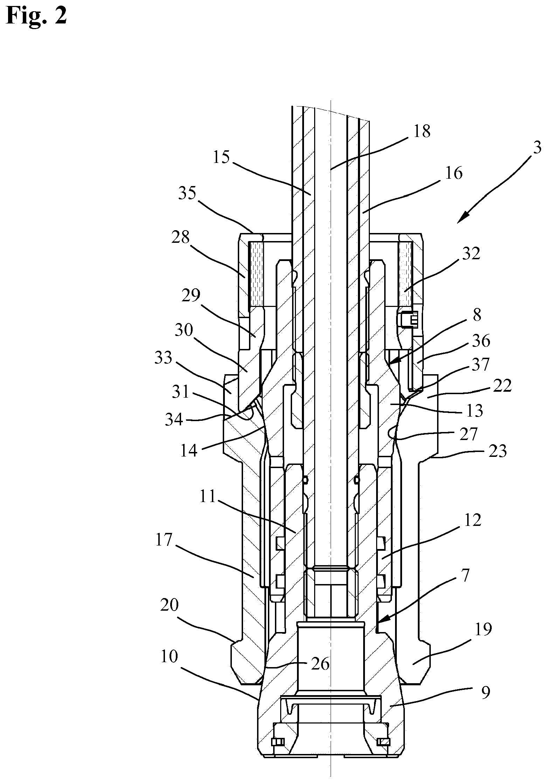

Der in Figur 2 gesondert dargestellte Spannsatz 3 enthält einen Spannkonus, der aus zwei separaten und in Axialrichtung gegeneinander verschiebbaren Teilen 7 und 8 besteht. Das der Werkzeugaufhahme 4 zugewandte und in Figur 2 unten angeordnete erste Teil 7 des Spannkonus weist einen konischen Spannbereich 9 mit einer konischen Außenfläche 10 und einen zylindrischen Führungsbereich 11 auf. Das zweite Teil 8 des Spannkegels enthält einen auf dem Führungsbereich 11 des ersten Teils 7 verschiebbar geführten, hohlzylindrischen Führungsabschnitt 12 und einen konischen Spannbereich 13 mit einer konischen Außenfläche 14. Die konischen Außenflächen 10 und 14 der Spannbereiche 9 und 13 an den beiden Teilen 7 und 8 sind entgegengesetzt zueinander geneigt. Durch den Führungsbereich 11 und den Führungsabschnitt 12 sind die beiden Teile 7 und 8 des Spannkegels gegeneinander axial verschiebbar geführt.

Die Spannstange 2 enthält ein axial verschiebbares erstes Stangenteil 15 und ein relativ zum ersten Stangenteil 1 axial verschiebbares zweites Stangenteil 16. An dem vorderen Ende des hier rohrförmig ausgebildeten ersten Stangenteils 15 ist das erste Teil 7 des Spannkonus 15 befestigt, während das zweite Teil 8 des Spannkonus am Ende des um das erste Stangenteil 15 angeordneten und zu diesem koaxialen, zweiten rohrförmigen Stangenteils 16 befestigt ist. Über die beiden Stangenteile 15 und 16 können die beiden Teile 7 und 8 des Spannkonus zusammenbewegt oder auseinanderbewegt werden.

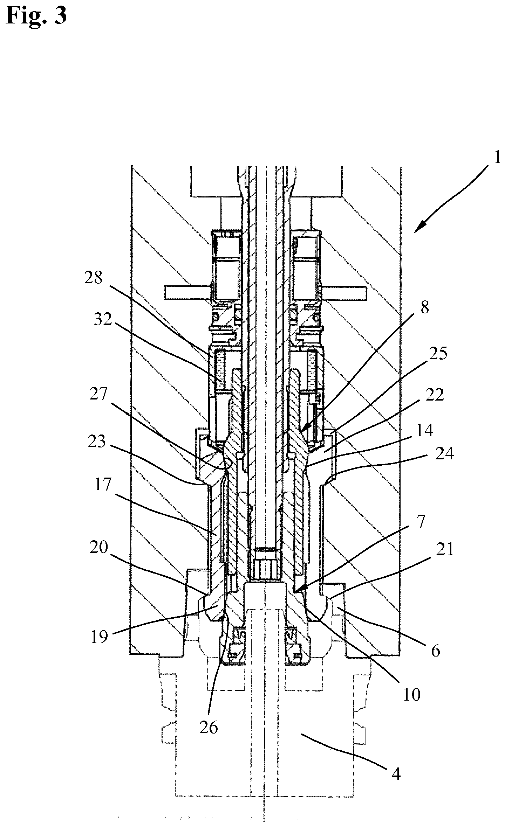

An der konischen Außenfläche 10 des ersten Teils 7 und der konischen Außenfläche 14 des zweiten Teils 8 des Spannkegels liegen mehrere in Umfangsrichtung gleich beabstandete Spannelemente 17 an, die in einer in Figur 2 gezeigten Spannstellung parallel zu einer Mittelachse 18 des Spannsatzes 3 angeordnet sind. Die hier als Spannklauen ausgebildeten Spannelemente 17 enthalten ein zur Werkzeugaufnahme 4 weisendes, verdicktes vorderes Ende 19 mit einer ersten äußeren Spannfläche 20, die in einer in Figur 3 gezeigten Spannstellung in an sich bekannter Weise zu Anlage an einer konischen Innenfläche 21 an der Innenseite des in Figur 1 gezeigten Hohlkegel-Schafts 6 der Werkzeugaufhahme 4 gelangt. Die klauenförmigen Spannelemente 17 enthalten auch ein verdicktes hinteres Ende 22 mit einer zur ersten Spannfläche 20 entgegengesetzt geneigten und ebenfalls durch einen konischen Flächenabschnitt gebildeten zweiten äußeren Spannfläche 23, mit der sich die Spannelemente 17 gemäß Figur 3 an einer konischen Gegenfläche 24 innerhalb eines Ringabsatzes 25 im Maschinenteil 1 abstützen.

Durch eine Zusammenbewegung der beiden Teile 7 und 8 des Spannkonus können die klauenförmigen Spannelemente 17 in die radial äußere Spannstellung und durch Auseinanderbewegen der beiden Teile 7 und 8 des Spannkonus in die radial innere Lösestellung bewegt werden.

In der Spannstellung von Figur 3 liegen die klauenförmigen Spannelemente 17 mit einer an der Innenseite des vorderen Endes 19 vorgesehenen ersten inneren Spannfläche 26 an der konischen Außenfläche 10 des ersten Teils 7 und mit einer an der Innenseite der hinteren Endes 22 vorgesehenen zweiten inneren Spannfläche 27 an der konischen Außenfläche 14 des zweiten Teils 8 an.

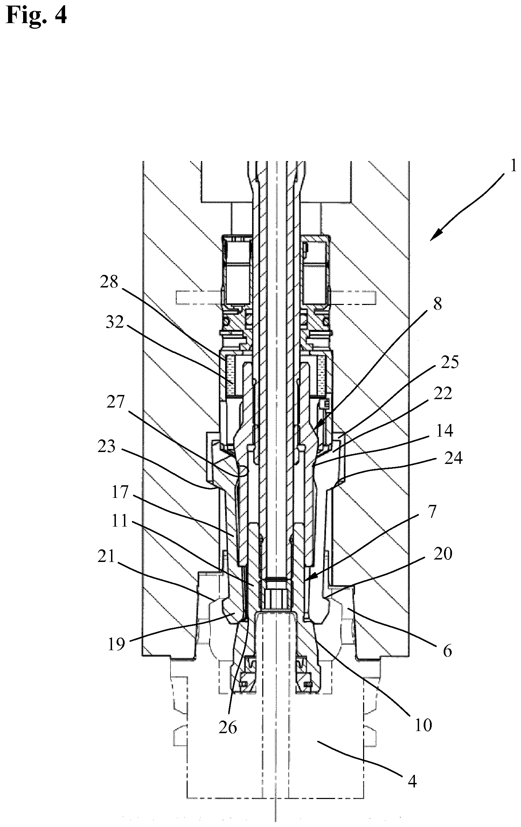

In der Lösestellung von Figur 4 liegen die in die Werkzeugaufhahme 4 eingreifenden vorderen Enden 19 der klauenförmigen Spannelemente 17 mit ihren ersten inneren Spannflächen 26 auf Schrägen am schlankeren hinteren Ende des konischen Spannbereichs 9 am ersten Teils 7 des Spannkegels auf, so dass die vorderen Enden 19 radial nach innen bewegt sind und die Werkzeugaufhahme 4 für einen Wechsel freigeben. Die konischen Außenflächen 10 und 14 an den beiden Teilen 7 und 8 des Spannkegels und die inneren Spannflächen 26 und 27 der Spannklauen 17 sind derart aufeinander abgestimmt, dass sich die Spannklauen 17 beim Zusammenschieben der beiden Teile 7 und 8 radial nach außen bewegen und beim Auseinanderschieben der beiden Teile 7 und 8 radial nach innen bewegen können.

An den am zweiten Teil 8 des Spannkonus anliegenden rückseitigen Enden 22 der klauenförmigen Spannelemente 17 ist ein in Figur 2 näher dargestellter Abstandshalter angeordnet ist, durch den die Spannelemente 17 in Umfangsrichtung in einem vorbestimmten Abstand voneinander gehalten werden. Der Abstandshalter enthält eine innerhalb einer Führungsbuchse 28 axial verschiebbar geführte Haltebuchse 29, die an ihrem den Spannelementen 17 zugewandten Ende mehrere in Umfangsrichtung gleich beabstandete, in Axialrichtung vorstehende Ansätze 30 mit abgeschrägten vorderen Stirnflächen 31 aufweist. Die Haltebuchse 29 ist innerhalb der Führungsbuchse 28 verschiebbar und wird durch eine Druckfeder 32 in Richtung der klauenförmigen Spannelemente 17 gedrückt. Die Ansätze 30 der Haltebuchse 29 greifen in eine Nut 33 am rückseitigen zweiten Ende 22 der klauenförmigen Spannelemente 17 ein und liegen mit ihrer abgeschrägten Stirnfläche 31 an einer schrägen Gegenfläche 34 im Grund der Nut 33 an.

Die Führungsbuchse 28 hat eine hintere Anlagefläche 35 und weist am vorderen Ende mehrere in Umfangsrichtung beabstandete und zwischen die Ansätze 30 der Haltebuchse 29 ragende Ringsegmente 36 mit abgeschrägten vorderen Enden 37 zur Anlage an den rückseitigen zweiten Enden 22 der klauenförmigen Spannelemente 17 auf.

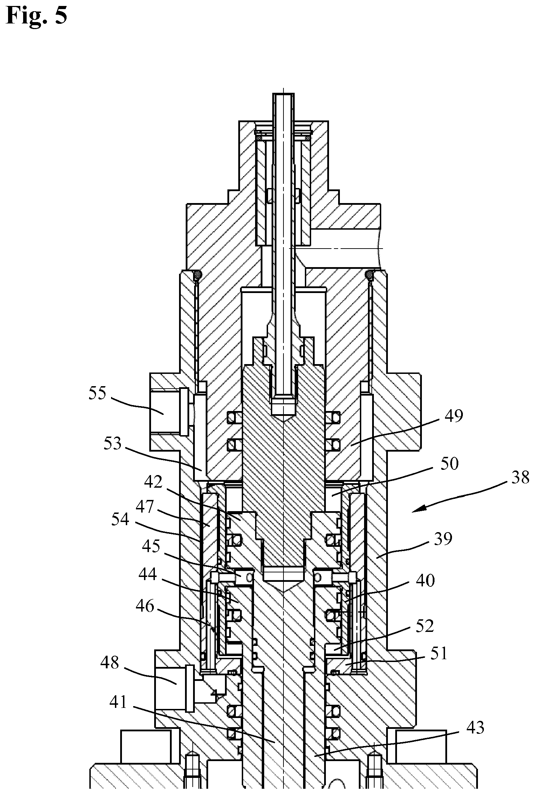

An dem von der Werkzeugaufnahme 4 abgewandten hinteren Ende des Maschinenteils 1 ist eine in Figur 5 gesondert dargestellte Betätigungseinrichtung 38 angeordnet, durch welche die beiden Stangenteile 15 und 16 der Spannstange 2 entgegengesetzt zueinander bewegt werden können. Die Betätigungseinrichtung 38 enthält einen innerhalb eines Gehäuses 39 angeordneten Zylinder 40, in dem ein über eine erste Kolbenstange 41 und das erste Stangenteil 15 der Spannstange 2 mit dem ersten Teil 7 des Spannkonus verbundener erster Kolben 42 und ein über eine zweite Kolbenstange 43 und das zweiten Stangenteil 16 der Spannstange 2 mit dem zweiten Teil 8 des Spannkonus verbundener zweiter Kolben 44 axial verschiebbar und radial abgedichtet geführt sind. Der zweite Kolben 44 ist als Ringkolben ausgebildet, in dem die Kolbenstange 41 des ersten Kolbens 42 verschiebbar geführt ist.

Wie aus Figur 5 hervorgeht, befindet sich zwischen den beiden Kolben 42 und 44 eine erste Druckkammer 45, die über einen ersten Kanal 46 in einer den Zylinder 40 umgebenden Hülse 47 mit einem ersten Anschluss 48 verbunden ist. Zwischen dem ersten Kolben 42 und einer Stirnfläche eines in das Gehäuse 39 eingeschraubten hinteren Endteils 49 am hinteren Ende des Zylinders 40 wird eine zweite Druckkammer 50 und zwischen dem zweiten Kolben 44 und einem Abschlussring 51 am vorderen Ende des Zylinders 40 eine dritte Druckkammer 52 begrenzt. Die zweite Druckkammer 50 und die dritte Druckkammer 52 sind über einen zwischen dem Endteil 49 und dem Gehäuse 39 verlaufenden zweiten Kanal 53 und einen zwischen dem Zylinder 40 und der Hülse 47 verlaufenden dritten Kanal 54 mit einem zweiten Anschluss 55 verbunden.

Die vorstehend beschriebene Spannvorrichtung funktioniert wie folgt:
Wenn der erste Anschluss 48 der Betätigungseinrichtung 38 mit einem Druckfluid beaufschlagt wird, fahren die beiden Kolben 42 und 44 auseinander, wodurch die beiden Teile 7 und 8 des Spannkonus über die Kolbenstangen 41 und 43 und die beiden Stangenteile 15 und 16 der Spannstange 2 aufeinander zu bewegt werden und die Spannelemente 17 in die in Figur 3 gezeigte Spannstellung gelangen. In dieser Spannstellung liegen die äußerem Spannflächen 20 und 23 der Spannelemente 17 an der konischen Innenfläche 21 der Werkzeugaufnahme 4 bzw. der konischen Gegenfläche 24 im Maschinenteil 1 an, wodurch die Werkzeugaufnahme 4 unter Zug in der Aufhahmeöffhung 5 des Maschinenteils 1 gehalten wird.

Zum Lösen der Spannvorrichtung wird der zweite Anschluss 55 mit einem Druckfluid beaufschlagt, wodurch die beiden Kolben 42 und 44 aufeinander zu bewegt werden. Dadurch werden die beiden Teile 7 und 8 des Spannkonus auseinander bewegt, so dass die Spannelemente 17 in die in Figur 4 gezeigte Lösestellung gelangen. In dieser Stellung sind die an der Außenseite der beiden Teile 7 und 8 des Spannkonus anliegenden Spannelemente 17 so weit radial nach innen verschoben, dass deren Spannflächen 20 außer Eingriff mit der konischen Innenfläche 21 an der Innenseite der Werkzeugaufnahme 4 gelangen und die Werkzeugaufnahme 4 ohne weiteres aus der konischen Aufnahmeöffnung 5 entnommen werden kann.

Der erfindungsgemäße Spannsatz ist nicht auf das vorstehend beschriebene Ausführungsbeispiel beschränkt. So können die Spannelemente z.B. die Form einer Kugel oder eine andere geeignete Form aufweisen. Das erfindungsgemäße Spannsystem kann nicht nur bei Hohlkegelspannsystemen, sondern auch bei Steilkegelspannsystemen oder anderen Spannsystemen zum Einsatz gelangen. Der Spannsatz kann sowohl zur Halterung von Werkzeugen mit Hohlschaftkegel (HSK) als auch Halterung von Werkzeugen mit Steilkegel (SK) in Art einer Spannzange, als Spannsatz für Polygonschaft-Spannsysteme (PSC), als Spannsatz mit kugelförmigen Spannelementen oder als Spannsatz für andere Werkzeugwechselsysteme ausgeführt sein. Die Spannvorrichtung ist auch für die lösbare Halterung von Werkstücken geeignet. Außerdem können unterschiedliche Betätigungseinrichtungen für die Zusammen- oder Auseinanderbewegung der beiden Teile des Spannkonus zum Einsatz gelangen.

### Bezugszeichenliste

- 1: Maschinenteil
- 2: Spannstange
- 3: Spannsatz
- 4: Werkzeugaufhahme
- 5: konische Aufnahmeöffnung
- 6: Hohlkegel-Schaft
- 7: erstes Teil des Spannkonus
- 8: zweites Teil des Spannkonus
- 9: konischer Spannbereich
- 10: konische Außenfläche
- 11: zylindrischer Führungsbereich
- 12: Führungsabschnitt
- 13: konischer Spannbereich
- 14: konische Außenfläche
- 15: erstes Stangenteil
- 16: zweites Stangenteil
- 17: klauenförmige Spannelemente
- 18: Mittelachse
- 19: erstes Ende der Spannelemente
- 20: erste äußere Spannfläche
- 21: konische Innenfläche
- 22: zweites Ende der Spannelemente
- 23: zweite äußere Spannfläche
- 24: konische Gegenfläche
- 25: Ringabsatz
- 26: erste innere Spannfläche
- 27: zweite innere Spannfläche
- 28: Führungsbuchse
- 29: Haltebuchse
- 30: Ansätze
- 31: Stirnfläche
- 32: Druckfeder
- 33: Nut
- 34: Gegenfläche
- 35: hintere Anlagefläche
- 36: Ringsegmente
- 37: abgeschrägte vordere Enden
- 38: Betätigungseinrichtung
- 39: Gehäuse
- 40: Zylinder
- 41: erste Kolbenstange
- 42: erster Kolben
- 43: zweite Kolbenstange
- 44: zweiter Kolben
- 45: erste Druckkammer
- 46: erster Kanal
- 47: Hülse
- 48: erster Anschluss
- 49: Endteil
- 50: zweite Druckkammer
- 51: Abschlussring
- 52: dritte Druckkammer
- 53: zweiter Kanal
- 54: dritter Kanal
- 55: zweiter Anschluss

## Patentansprüche

1. Spannsatz (3) für eine Spannvorrichtung zum Spannen eines Werkstücks oder eines Werkzeugs bzw. einer Werkzeugaufnahme (4) an einem Maschinenteil (1) mit einem über eine Spannstange (2) axial verschiebbaren Spannkonus und mehreren an der Außenseite des Spannkonus in Umfangsrichtung voneinander beabstandet anliegenden Spannelementen (17), die durch Axialbewegung der Spannstange (2) zwischen einer radial äußeren Spannstellung und einer radial inneren Lösestellung bewegbar sind, **dadurch gekennzeichnet, dass** der Spannkonus zwei in Axialrichtung entgegengesetzt zueinander verschiebbare Teile (7, 8) und die Spannstange (2) ein mit dem ersten Teil (7) des Spannkonus verbundenes erstes Stangenteil (15) und ein mit dem zweiten Teil (8) des Spannkonus verbundenes zweites Stangenteil (16) aufweist, wobei die Spannelemente (17) durch Zusammenbewegen der beiden Teile (7, 8) des Spannkonus in die radial äußere Spannstellung und durch Auseinanderbewegen der beiden Teile (7, 8) des Spannkonus in die radial innere Lösestellung bewegbar sind.

2. Spannsatz (3) nach Anspruch 1, **dadurch gekennzeichnet, dass** das erste Stangenteil (15) axial verschiebbar innerhalb des rohrförmigen zweiten Stangenteils (16) angeordnet ist.

3. Spannsatz (3) nach Anspruch 1 oder 2, **dadurch gekennzeichnet, dass** die Spannelemente (17) eine erste innere Spannfläche (26) zur Anlage an einer konischen Außenfläche (10) des ersten Teils (7) des Spannkonus und eine zweite innere Spannfläche (27) zur Anlage an einer konischen Außenfläche (14) des zweiten Teils des Spannkonus aufweisen.

4. Spannsatz (3) nach einem der Ansprüche 1 bis 3, **dadurch gekennzeichnet, dass** das erste Teil (7) des Spannkonus einen zylindrischen Führungsbereich (11) enthält, auf dem ein hohlzylindrischer Führungsabschnitt des zweiten Teils (8) des Spannkonus verschiebbar geführt ist.

5. Spannsatz (3) nach einem der Ansprüche 1 bis 4, **dadurch gekennzeichnet, dass** die Spannelemente (17) in Form von Spannklauen mit einer durch einen konischen Flächenabschnitt gebildeten ersten äußeren Spannfläche (20) und einer zur ersten Spannfläche (20) entgegengesetzt geneigten und ebenfalls durch einen konischen Flächenabschnitt gebildeten zweiten äußeren Spannfläche (23) ausgebildet sind.

6. Spannvorrichtung zum Spannen eines Werkstücks oder eines Werkzeugs bzw. einer Werkzeugaufnahme (4) an einem Maschinenteil (1) mit einem innerhalb des Maschinenteils (1) angeordneten Spannsatz (3) und einer dem Spannsatz (3) zugeordneten Betätigungseinrichtung (38), **dadurch gekennzeichnet, dass** der Spannsatz (3) nach einem der Ansprüche 1 bis 5 ausgebildet ist.

7. Spannvorrichtung nach Anspruch 6, **dadurch gekennzeichnet, dass** die Betätigungseinrichtung (38) einen innerhalb eines Gehäuses (39) angeordneten Zylinder (40) enthält, in dem ein über eine erste Kolbenstange (41) mit dem ersten Teil (7) des Spannkonus verbundener erster Kolben (42) und ein über eine zweite Kolbenstange (43) mit dem zweiten Teil (8) des Spannkonus (2) verbundener zweiter Kolben 44 axial verschiebbar angeordnet sind.

8. Spannvorrichtung nach Anspruch 7, **dadurch gekennzeichnet, dass** sich zwischen den beiden Kolben (42, 44) eine erste Druckkammer (45) befindet, die über einen ersten Kanal (46) in einer den Zylinder (40) umgebenden Hülse (47) mit einem ersten Anschluss (48) verbunden ist.

9. Spannvorrichtung nach Anspruch7 oder 8, **dadurch gekennzeichnet, dass** zwischen dem ersten Kolben (42) und einer Stirnfläche eines in das Gehäuse (39) eingeschraubten hinteren Endteils (49) am hinteren Ende des Zylinders (40) eine zweite Druckkammer (50) und zwischen dem zweiten Kolben (44) und einem Abschlussring (51) am vorderen Ende des Zylinders (40) eine dritte Druckkammer (52) begrenzt wird, wobei zweite Druckkammer (50) und die dritte Druckkammer (52) mit einem zweiten Anschluss (55) verbunden sind.

10. Spannvorrichtung nach Anspruch 9, **dadurch gekennzeichnet, dass** die Betätigungseinrichtung (38) eine Spannfeder zur Halterung der Spannelemente (17) in der Spannstellung und eine Löseeinheit zur Bewegung der Spannelemente (17) in die Lösestellung entgegen der Kraft der Spannfeder enthält.

11. Spannvorrichtung nach einem der Ansprüche 6 bis 10, **dadurch gekennzeichnet, dass** das Maschinenteil (1) eine drehbar gelagerte und durch einen Antrieb drehbare Arbeitsspindel einer Werkzeugmaschine ist.

## Claims

1. Clamping set (3) for a clamping device for clamping a workpiece or a tool or a tool holder (4) on a machine part (1) with a clamping cone which is displaceable axially via a clamping rod (2) and several clamping elements (17) resting spaced from one another peripherally on the outer side of the clamping cone and which is movable by axial movement of the clamping rod (2) between a radially outer clamped position and a radially inner released position, **characterised in that** the clamping cone has two parts (7, 8) which are displaceable opposite to one another in axial direction and the clamping rod (2) has a first rod part (15) connected to the first part (7) of the clamping cone and a second rod part (16) connected to the second part (8) of the clamping cone, wherein the clamping elements (17) are movable into the radially outer clamped position by moving the two parts (7, 8) of the clamping cone together and into the radially inner released position by moving the two parts (7, 8) of the clamping cone apart.

2. Clamping set (3) according to claim 1, **characterised in that** the first rod part (15) is arranged to be axially displaceable within the tubular second rod part (16)

3. Clamping set (3) according to claim 1 or 2, **characterised in that** the clamping elements (17) have a first inner clamping surface (26) for resting on a conical outer surface (10) of the first part (7) of the clamping cone and a second inner clamping surface (27) for resting on a conical outer surface (14) of the second part of the clamping cone.

4. Clamping set (3) according to one of claims 1 to 3, **characterised in that** the first part (7) of the clamping cone contains a cylindrical guide region (11), on which a hollow-cylindrical guide section of the second part (8) of the clamping cone is guided to be displaceable.

5. Clamping set (3) according to one of claims 1 to 4, **characterised in that** the clamping elements (17) are designed in the form of clamping claws with a first outer clamping surface (20) formed by a conical surface section and a second outer clamping surface (23) inclined opposite to the first clamping surface (20) and likewise formed by a conical surface section.

6. Clamping device for clamping a workpiece or a tool or a tool holder (4) on a machine part (1) with a clamping set (3) arranged within the machine part (1) and an actuation device (38) assigned to the clamping set (3), **characterised in that** the clamping set (3) is designed according to one of claims 1 to 5.

7. Clamping device according to claim 6, **characterised in that** the actuation device (38) contains a cylinder (40) arranged within a housing (39) and in which a first piston (42) connected to the first part (7) of the clamping cone via a first piston rod (41) and a second piston 44 connected to the second part (8) of the clamping cone (2) via a second piston rod (43) are arranged to be axially displaceable.

8. Clamping device according to claim 7, **characterised in that** a first pressure chamber (45), which is connected to a first connection (48) via a first channel (46) in a sleeve (47) surrounding the cylinder (40), is located between the two pistons (42, 44).

9. Clamping device according to claim 7 or 8, **characterised in that** a second pressure chamber (50) is limited between the first piston (42) and an end-face surface of a rear end part (49) screwed into the housing (39) on the rear end of the cylinder (40) and a third pressure chamber (52) is limited between the second piston (44) and an end ring (51) on the front end of the cylinder (40), wherein second pressure chamber (50) and the third pressure chamber (52) are connected to a second connection (55).

10. Clamping device according to claim 9, **characterised in that** the actuation device (38) contains a tension spring for mounting the clamping elements (17) in the clamped position and a release unit for moving the clamping elements (17) into the released position against the force of the tension spring.

11. Clamping device according to one of claims 6 to 10, **characterised in that** the machine part (1) is a rotatably mounted work spindle of a tool machine which is rotatable by a drive.

## Revendications

1. Kit de serrage (3) pour un dispositif de serrage pour le serrage d'une pièce à usiner ou d'un outil ou d'un logement d'outil (4) au niveau d'une pièce de machine (1) avec un cône de serrage coulissant axialement par le biais d'une tige de serrage (2) et plusieurs éléments de serrage (17) reposant contre le côté extérieur du cône de serrage dans le sens périphérique à distance les uns des autres, qui peuvent être déplacés par le mouvement axial de la tige de serrage (2) entre une position de serrage radialement extérieure et une position de déblocage radialement intérieure, **caractérisé en ce que** le cône de serrage présente deux parties (7, 8) coulissant à l'opposé l'une de l'autre dans le sens axial et la tige de serrage (2) présente une première partie de tige (15) raccordée à la première partie (7) du cône de serrage et une seconde partie de tige (16) raccordée à la seconde partie (8) du cône de serrage, dans lequel les éléments de serrage (17) peuvent être déplacés par le rapprochement des deux parties (7, 8) du cône de serrage dans la position de serrage radialement extérieure et par éloignement des deux parties (7, 8) du cône de serrage dans la position de déblocage radialement intérieure.

2. Kit de serrage (3) selon la revendication 1, **caractérisé en ce que** la première partie de tige (15) est agencée de manière axialement coulissante à l'intérieur de la seconde partie de tige tubulaire (16).

3. Kit de serrage (3) selon la revendication 1 ou 2, **caractérisé en ce que** les éléments de serrage (17) présentent une première surface de serrage intérieure (26) pour l'appui contre une surface extérieure conique (10) de la première partie (7) du cône de serrage et une seconde surface de serrage intérieure (27) pour l'appui contre une surface extérieure conique (14) de la seconde partie du cône de serrage.

4. Kit de serrage (3) selon l'une des revendications 1 à 3, **caractérisé en ce que** la première partie (7) du cône de serrage contient une zone de guidage cylindrique (11), sur laquelle une section de guidage cylindrique creuse de la seconde partie (8) du cône de serrage est guidée de manière coulissante.

5. Kit de serrage (3) selon l'une des revendications 1 à 4, **caractérisé en ce que** les éléments de serrage (17) sont réalisés sous la forme de mâchoires de serrage avec une première surface de serrage extérieure (20) formée par une section de surface conique et une seconde surface de serrage extérieure (23) formée également par une section de surface conique et inclinée à l'opposé de la première surface de serrage (20).

6. Dispositif de serrage pour le serrage d'une pièce à usiner ou d'un outil ou d'un logement d'outil (4) au niveau d'une pièce de machine (1) avec un kit de serrage (3) agencé à l'intérieur de la pièce de machine (1) et un dispositif d'actionnement (38) associé au kit de serrage (3), **caractérisé en ce que** le kit de serrage (3) est réalisé selon l'une des revendications 1 à 5.

7. Dispositif de serrage selon la revendication 6, **caractérisé en ce que** le dispositif d'actionnement (38) contient un cylindre (40), agencé à l'intérieur d'un boîtier (39), dans lequel un premier piston (42) raccordé par le biais d'une première tige de piston (41) à la première partie (7) du cône de serrage et un second piston (44) raccordé par le biais d'une seconde tige de piston (43) à la seconde partie (8) du cône de serrage (2) sont agencés de manière axialement coulissante.

8. Dispositif de serrage selon la revendication 7, **caractérisé en ce qu'**une première chambre de pression (45) se trouve entre les deux pistons (42, 44), laquelle est raccordée à un premier raccord (48) par le biais d'un premier canal (46) dans une douille (47) entourant le cylindre (40).

9. Dispositif de serrage selon la revendication 7 ou 8, **caractérisé en ce qu'**une deuxième chambre de pression (50) est délimitée entre le premier piston (42) et une surface avant d'une partie d'extrémité (49) arrière vissée dans le boîtier (39) au niveau de l'extrémité arrière du cylindre (40) et une troisième chambre de pression (52) est délimitée entre le second piston (44) et un anneau de fermeture (51) au niveau de l'extrémité avant du cylindre (40), dans lequel la deuxième chambre de pression (50) et la troisième chambre de pression (52) sont raccordées à un second raccord (55).

10. Dispositif de serrage selon la revendication 9, **caractérisé en ce que** le dispositif d'actionnement (38) contient un ressort tendeur pour le maintien des éléments de serrage (17) dans la position de serrage et une unité de déblocage pour le déplacement des éléments de serrage (17) dans la position de déblocage dans le sens inverse à la force du ressort tendeur.

11. Dispositif de serrage selon l'une des revendications 6 à 10, **caractérisé en ce que** la pièce de machine (1) est une broche de travail logée de manière à pouvoir tourner et pouvant tourner grâce à un entraînement d'une machine-outil.
